# EUROPEAN PATENT SPECIFICATION

(11) **EP 0 741 217 B1**
(45) Date of publication and mention of the grant of the patent: **18.09.2002**
(21) Application number: 95302978.2
(22) Date of filing: 02.05.1995
(51) Int. Cl.: E04G 23/02, B25F 3/00, B25D 17/00, F16B 15/06

(54) **Insertion tool for dry fixing system**
Einschlagwerkzeug für Trocken-Befestigungssystem
Outil d'insertion pour système de fixation à sec

(43) Date of publication of application: 06.11.1996
(60) Divisional application: 00118727.7
(73) Proprietor: HELIFIX LIMITED, London W3 0RX (GB)
(72) Inventor: Paterson, Robert Ian, London W6 0UJ (GB); Breeze, Brian Alan, Wallsend, Tyne & Wear NE28 9DZ (GB)
(74) Representative: Butler, Michael John

(56) References cited:
- EP-A- 0 426 918
- EP-A- 0 494 723
- BE-A- 840 070
- DE-A- 4 140 492
- GB-A- 2 213 420
- GB-A- 2 262 560
- GB-A- 2 280 927
- US-A- 2 657 383
- US-A- 4 218 795

## Description

The present invention relates to an insertion tool for inserting wall ties in a dry fixing system.

It is frequently desirable to form a connection between building units of materials such as brick or concrete. Typical instances include tying together the inner and outer leaves of a cavity wall, fixing bricks back to lighter weight blocks, and providing extra strengthening at the junction of two walls. Wall ties are commonly used for these purposes. Suitable types of tie include one-piece stainless steel rods formed with helical fins around a solid core and sold by Helifix Ltd under the Trade Mark DRYFIX.

One method currently used with considerable success for installing helical ties is to drill a pilot hole in the required position, insert the tie and then grout the tie in position using a chemically bonding grout. This is described in EP-A-0171250. Although the results are eminently satisfactory, the installation operation is time consuming and requires skill. Furthermore, the nature of the grout material renders the installation operation sensitive to climatic conditions, in particular, very high and very low temperatures.

It is an object of the invention to provide an insertion tool for inserting a wall tie as part of a fixing system which does not rely upon a chemical grout.

In the art, a number of devices are known for assisting the driving in of a nail into timber, for example, GB-A-2213420 and DE-A-4140492. However, these tools would not be suitable for driving wall ties, having a central core and two or more helical fins, into building units of masonry or the like.

DE-A-4140492 discloses an insertion tool for driving a nail into timber. The tool comprises: a housing having an internal cavity, a bore at the front end arranged to receive the nail and an opening at the rear end; a spring biased dolly arranged for reciprocating movement within the housing having a fore-end extending into the bore; and an anvil. The dolly/anvil sub-assembly extends through the opening at the rear end of the housing with the anvil being provided to receive repeated percussive blows and to transmit these via the dolly to the nail.

According to the present invention, there is provided an insertion tool for inserting a wall tie comprising a central core with two or more helical fins into a building unit of brick or concrete, wherein the tool comprises: a housing having an interior cavity, a bore at the front end arranged to receive the tie, and an opening at the rear end; a spring biased dolly arranged for reciprocating movement within the housing, having a fore-end extending into the bore and a tapered rear end; and an anvil which receives the tapered end of the dolly; the dolly/anvil sub-assembly extending through the opening at the rear end of the housing, and the anvil being adapted to receive repeated percussive blows from a percussion tool and to transmit these via the dolly to the wall tie.

The tool is used to install a wall tie for interconnecting two or more building units of brick and/or concrete without the use of grout. The wall tie consists of a rod comprising a solid core with two or more helical fins and preferably formed into a point at at least one end. The method comprises: forming a first pilot hole through a first building unit, forming a second pilot hole, coaxial with the first pilot hole, in a second building unit, the pilot holes being formed so that their diameters are less than the overall diameter of the tie which is to engage the building units; introducing the tie into the pilot hole in the first building unit; and inserting the tie by driving it sequentially into the two pilot holes by means of an insertion tool of the present invention which is driven by a percussion tool. As described above, the insertion tool comprises a housing having means in the form of a bore to receive the tie, the tool further including means in the form of a spring biased dolly which is arranged for axial reciprocating movement within the housing to transmit repeated axial impacts from the percussion tool to the tie, while allowing the tie to rotate as the helical fins cut into the material of the building units.

Thus, two building units can be tied together in a "dry" manner, that is to say, without the need for any grout. In many cases, therefore, it will merely be necessary for an installer to drill pilot holes and then, using a percussion tool such as a hammer drill or a pneumatic hammer, together with an insertion tool of the present invention, simply drive the ties home. It has been found that a tenacious bond can be achieved even without grouting since the helical fins cut into the material of the building units and the ties are therefore extremely resistant to removal.

Naturally, more than two building units can be interconnected sequentially in this way.

The tool is equally applicable to cavity situations, where the building units are spaced apart, or adjacent situations, where the units are in contact.

Conveniently, the tie has a diameter of 6mm and the pilot holes have diameters in the range of 4mm to 5mm; or the tie has a diameter of 8mm and the pilot holes have diameters in the range of from 5mm to 6.5mm; or the tie has a diameter of 10mm and the pilot holes have diameters in the range of 6mm to 8mm.

The insertion tool is described above. The blows are applied by a percussion tool such as a hammer drill or a pneumatic hammer. A rotary percussion tool can be used, though the rotary action is not necessary. Indeed, the effect of rotary action would be nullified by the tool since the engagement between the tie and the dolly is unrestrained in the rotational sense.

Preferably, the bore at the front of the housing is constituted by a removable sleeve. This enables ties of different diameters to be received. The sleeve may be held in position by means of a grub screw.

Preferably, the tapered end of the dolly is a mating fit in a suitably tapered cavity in the anvil. The anvil may have a transverse opening corresponding to the position of the tip of the tapered part of the dolly which would allow a dolly/anvil sub-assembly to be dismantled by applying a blow to end of the tapered part.

Preferably, smooth reciprocal movement of the dolly is achieved by means of a bearing member mounted on the dolly and engaging the inside surface of the housing cavity. Preferably, the anvil includes a formation arranged to engage the operative part of a percussion tool such as a hammer drill. Usually, the formation would take the form of grooves which would engage splines in the hammer drill.

Preferably, the dolly/anvil assembly is biased rearwards. This may be achieved by means of a spring acting between a shoulder within the housing and a flange on the dolly. The spring may engage the flange on the dolly via a suitable ring or collett. In cases where the percussive blows are to be supplied in combination with a rotary motion, it may be preferable for the spring to be "left-handed" in order to minimise frictional contact between the ends of the spring wire and the spring seatings, and to avoid the tendency of the spring wire ends to dig into the seatings.

The housing may be made of metal. Preferably, however, it is made from a suitable rigid plastics material such as nylon; this provides impact resistance, lightness and is thermally neutral.

Preferably the tool is provided with a sheath enveloping the rear part of the housing and having an aperture through which the dolly/anvil sub-assembly passes, the sheath constituting a hand grip. The sheath may be made from a flexible plastics material.

The invention may be carried into practice in various ways and some embodiments will now be described by way way of example with reference to the accompanying drawings, in which:-
Figure 1 is an axial section through an insertion tool in accordance with the invention;
Figure 2 is a view of a tie for use with the insertion tool; and
Figure 3, 4 and 5 are sequential schematic views of a method of inserting a tie using on insertion tool in accordance with the invention.

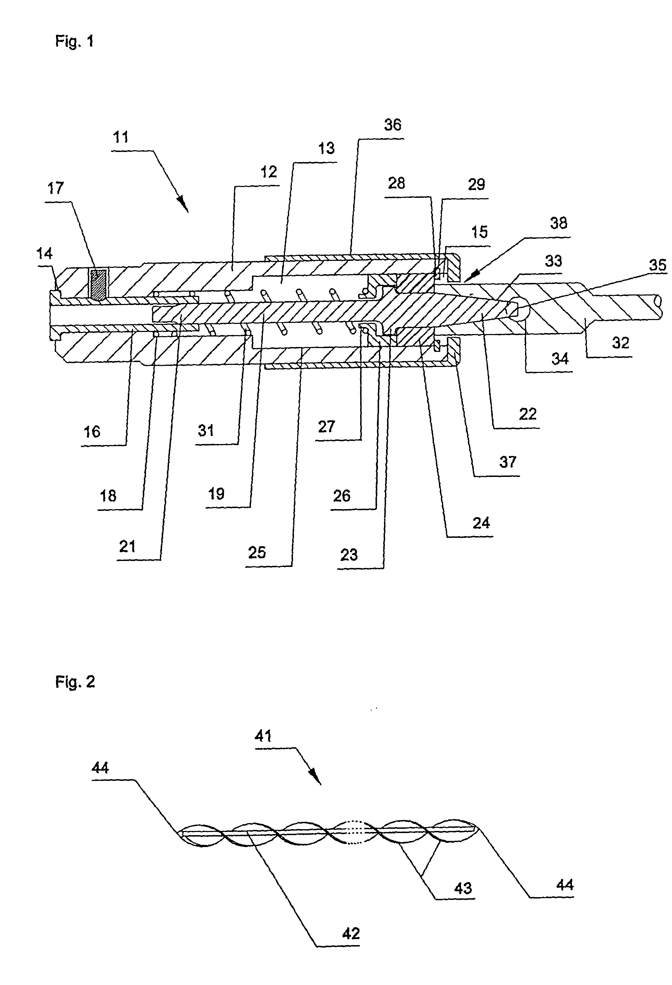

As shown in Figure 1, the tool 11 comprises a generally cylindrical body 12 having a cavity 13, a front opening 14 and a rear opening 15. A flanged sleeve 16 is located in the front opening 15 and extends rearwards. It is held in position by means of a grub screw 17. Intermediate the ends of the sleeve, the body 12 has an internal shoulder 18 falling rearwards.

Located within the cavity 13 and extending into the sleeve is a dolly 19. The front end 21 of the dolly 19 is a flat or optionally formed with a shallow indentation. The rear end 22 of the dolly 19 is formed with a very shallow taper (which is exaggerated in Figure 1 for reasons of clarity). Between the two ends 21, 22, the dolly has a circumferential flange 23.

A bearing ring 24 is located on the dolly, to the rear of the flange 23. The bearing ring 24 forms a smooth sliding fit with the inside wall 25 of the cavity 13. A stepped collett 26 is located forward of the bearing ring 24. The collett 26 houses the flange 23 and provides a forwardly extending ring 27.

A circlip 28 is located in an internal groove 29 at the rear of the body 12, behind the bearing ring 24. Those engagements between the flange 23, the bearing ring 24 and the circlip 28 ensure that the dolly 19, the collett 26 and the bearing ring 24 are retained within the cavity 13. A spring 31 surrounds the forward part of the dolly 19, acting between the shoulder 18 and the collett 26. In this way, the dolly is biassed rearwards, and the bearing ring 24 is urged into contact with the circlip 28.

The tool 11 also includes an anvil 32. The anvil 32 has a cavity 33 which is tapered to match the tapered end 22 of the dolly 19, and a lateral hole 34. The tapered end 22 of the dolly 19 is a mating fit in the cavity 33 and the rear tip 35 of the dolly 19 coincides with the hole 34. A plastics sheath 36 is located over the rear part of the body 12. The sheath 36 has an end wall 37 which serves to cover the circlip 28. The sheath 36 has an opening 38 through which the anvil 32 passes.

Figure 2 shows a suitable tie 41. The tie 41 would generally be longer than as shown. The tie 41 comprises a solid core 42 and two helical flanges 43. Both ends are sharpened into points 44, though one pointed end may be preferred.

In use, the tie 41 is inserted into the sleeve 16 of the tool 11 until it contacts the front end 21 of the dolly 19. The anvil 32 is then struck repeatedly. Each blow to the anvil 32 causes the dolly 19 to move axially forwards against the spring 31, the movement being guided by the sleeve 16 at the front and the bearing ring 24 at the rear. Between blows, the spring 31 returns the dolly 19 to the initial position shown in Figure 1.

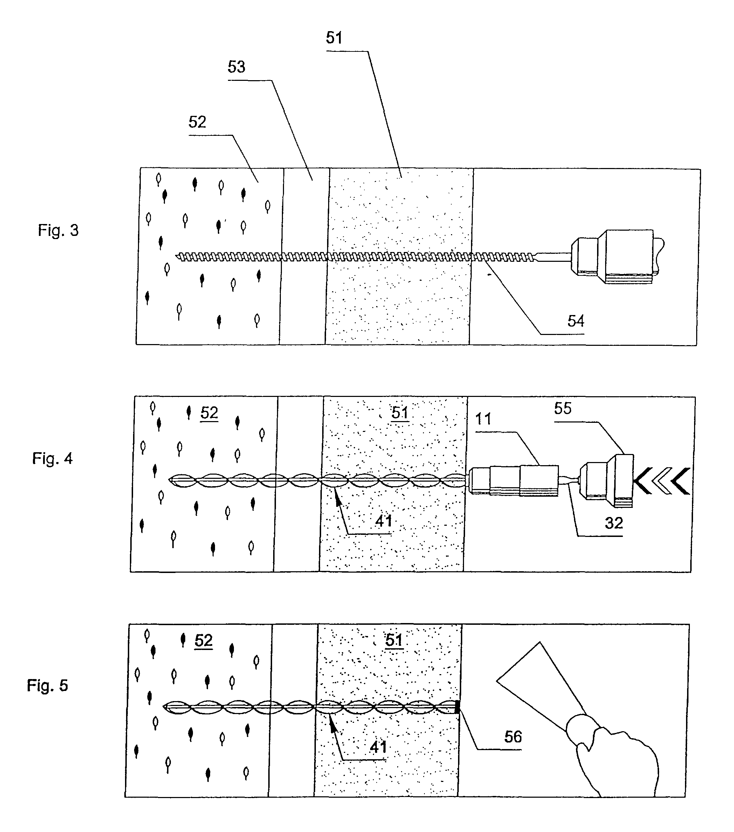

Figures 3 to 5 show the sequence of operations for inserting a tie 41. In this case a brick 51 in an outer leaf is to be tied back to an inner leaf of blocks 52, separated by a cavity 53.

Firstly, a pilot hole is drilled though the brick 51 and into the block 52 using a 6mm drill bit 54 as shown in Figure 1. Then a tie 41 with an overall diameter of 8mm is inserted into the tool 11 as described above. The tool 11 is connected to a hammer drill 55 which is energised, thereby applying repeated blows to the anvil 32. This is continued until the tie 41 is driven to the required depth, as shown in Figure 2. In this case the trailing end of the tie 41 is recessed below the surface of the brick 51. The recess 56 is made good with an appropriate filler.

## Claims

1. An insertion tool (11) for inserting a wall tie (41) comprising a central core with two or more helical fins into a building unit of brick or concrete, wherein the tool (11) comprises: a housing (12) having an interior cavity (13), a bore at the front end arranged to receive the tie (41), and an opening (15) at the rear end; a spring biased dolly (19) arranged for reciprocating movement within the housing, having a fore-end (21) extending into the bore and a tapered rear end (22); and an anvil (32) which receives the tapered end (22) of the dolly (19); the dolly/anvil sub-assembly (19,32) extending through the opening (15) at the rear end of the housing (12), and the anvil (32) being adapted to receive repeated percussive blows from a percussion tool and to transmit these via the dolly (19) to the wall tie (41).

2. A tool as claimed in claim 1, wherein the dolly is guided for axial reciprocating movement within the housing by a bearing member (24) which is mounted on the dolly and is slideable against the surface of the interior cavity and by the bore guiding the fore-end of the dolly.

3. A tool as claimed in claim 1 or 2, wherein the fore-end (21) of the dolly (19) is formed with an indentation for receiving a pointed end (44) of a tie (41).

4. A tool as claimed in claim 1, 2 or 3, wherein the dolly/anvil sub-assembly (19,32) is biased rearwards.

5. A tool as claimed in any preceding claim, wherein the bearing member (24) is a bearing ring.

6. A tool as claimed in any preceding claim, wherein the dolly (19) has a circumferential flange (23) located between its fore-end (21) and rear end.

7. A tool as claimed in claim 6, wherein the bearing member (24) is located on the dolly (19) to the rear of the circumferential flange (23) and a stepped collet (26) is located forward of the bearing member (24).

8. A tool as claimed in any preceding claim, wherein the dolly is biased by means of a spring (31) which surrounds a forward part of the dolly (19) and acts between a shoulder (18) within the housing and the circumferential flange (23) on the dolly (19).

9. A tool as claimed in any preceding claim, wherein the dolly is biased by means of a spring comprising a left-handed coil of spring wire.

10. A tool as claimed in any preceding claim, wherein the bore at the front of the housing is constituted by a removable sleeve (16).

11. A tool as claimed in claim 10, wherein the sleeve (16) is held in position in the housing (12) by means of a grub screw (17).

12. A tool as claimed in claim 10 or 11, wherein the sleeve (16) has front and rear ends, and intermediate these ends of the sleeve, the housing (12) has an internal shoulder falling rearwards for receiving an end of the spring.

13. A tool as claimed in any preceding claim, wherein the anvil (32) includes a formation arranged to engage the operative part of a percussion tool such as a hammer drill (55).

14. A tool as claimed in claim 13, wherein the formation on the anvil (32) is in the form of grooves arranged to engage splines in the operative part of the percussion tool.

15. A tool as claimed in any preceding claim, wherein a sheath (36) envelops the rear part of the housing (12) and has an aperture (38) through which the dolly/anvil sub-assembly (19,32) passes, the sheath (36) constituting a hand grip.

16. A tool as claimed in any preceding claim, wherein a circlip (28) is located in an internal groove (29) of the housing (12) at the rear of the housing to retain the dolly (19) within the interior cavity (13).

## Patentansprüche

1. Einschlagwerkzeug (11) zum Einsetzen bzw. Einschlagen eines Wandbandes bzw. eines Wandstabes (41) mit einem zentralen Kern mit zwei oder mehr spiralförmigen Rippen in eine Gebäudeeinheit aus Ziegel- bzw. Mauerstein oder Beton, wobei das Werkzeug (11) aufweist: ein Gehäuse (12) mit einem inneren Hohlraum (13), einer Bohrung an dem vorderen Ende, die angeordnet ist, um das Band (41) aufzunehmen, und mit einer Öffnung (15) an dem rückwärtigen Ende; einen federvorgespannten Bock bzw. Dolly (19), der für eine Hinund Herbewegung innerhalb des Gehäuses angeordnet ist, mit einem Vorderende (21), das sich in die Bohrung erstreckt und einem kegelförmigen bzw. konisch zulaufenden Rückende (22); und einen Amboß (32), der das kegelförmige Ende (22) des Bocks (19) aufnimmt; wobei die Bock-/Amboß-Unteranordnung (19, 32) sich durch die Öffnung (15) an dem rückwärtigen Ende des Gehäuses (12) erstreckt, und der Amboß (32) ausgelegt ist, wiederholte Schlagstöße von einem Stoßwerkzeug aufzunehmen und diese über den Bock (19) zu dem Wandband (41) zu übertragen.

2. Werkzeug nach Anspruch 1, bei dem der Bock für eine axiale Hin- und Herbewegung innerhalb des Gehäuses durch ein Stützelement (24) geführt ist, das auf dem Bock angebracht ist und gegen die Oberfläche des inneren Hohlraums und durch die Bohrung verschiebbar ist, die das Vorderende des Bocks führt.

3. Werkzeug nach Anspruch 1 oder 2, bei dem das Vorderende (21) des Bocks (19) mit einer Vertiefung gebildet ist, um ein spitzes Ende (44) eines Bandes (41) aufzunehmen.

4. Werkzeug nach einem der Ansprüche 1, 2 oder 3, bei dem die Bock-/Amboß-Unterandordnung (19, 32) nach hinten vorgespannt ist.

5. Werkzeug nach einem der vorstehenden Ansprüche, bei dem das Stützelement (24) ein Stützring ist.

6. Werkzeug nach einem der vorstehenden Ansprüche, bei dem der Bock (19) einen Umfangsflansch (23) aufweist, der zwischen dessen Vorderende (21) und Rückende angeordnet ist.

7. Werkzeug nach Anspruch 6, bei dem das Stützelement (24) auf dem Bock (19) hinter den Umfangsflanschen (23) angeordnet ist und ein Stufenring bzw. eine Stufenhülse (26) vor dem Stützelement (24) angeordnet ist.

8. Werkzeug nach einem der vorstehenden Ansprüche, bei dem der Bock mittels einer Feder (31) vorgespannt ist, die einen vorderen Teil des Bocks (19) umgibt und zwischen einer Schulter (18) innerhalb des Gehäuses und den Umfangsflansch (23) auf den Bock (19) wirkt.

9. Werkzeug nach einem der vorstehenden Ansprüche, bei dem der Bock mittels einer Feder vorgespannt ist, die eine linksgewickelte bzw. linksdrehende Spule aus Federdraht umfaßt.

10. Werkzeug nach einem der vorstehenden Ansprüche, bei dem die Bohrung an der Front des Gehäuses durch ein abnehmbares Rohr (16) gebildet ist.

11. Werkzeug nach Anspruch 10, bei dem das Rohr (16) in dem Gehäuse (12) mittels einer Madenschraube bzw. eines Gewindestiftes (17) in Position gehalten ist.

12. Werkzeug nach Anspruch 10 oder 11, bei dem das Rohr (16) ein vorderes und ein rückwärtiges Ende hat, und zwischen diesen Enden des Rohrs das Gehäuse (12) eine innere Schulter aufweist, die nach hinten abfällt, um ein Ende der Feder aufzunehmen.

13. Werkzeug nach einem der vorstehenden Ansprüche, bei dem der Amboß (32) eine Formation enthält, die angeordnet ist, um an den wirkenden Teil eines Schlagwerkzeuges, wie ein Hammerbohrer (55), anzugreifen.

14. Werkzeug nach Anspruch 13, bei dem die Formation auf dem Amboß (32) in Form von Rillen ausgebildet ist, die angeordnet sind, um an Streifen bzw. Keile in dem wirkenden Teil des Schlagwerkzeuges anzugreifen.

15. Werkzeug nach einem der vorstehenden Ansprüche, bei dem eine Hülle (36) den rückwärtigen Teil des Gehäuses (12) umgibt und eine Öffnung (38) aufweist, durch die die Bock/Amboßunteranordnung (19, 32) durchreicht, wobei die Hülle (36) einen Handgriff bildet.

16. Werkzeug nach einem der vorstehenden Ansprüche, bei dem ein Sicherungsbügel (28) in einer inneren Rille (29) des Gehäuses (12) an der Rückseite des Gehäuses angeordnet ist, um den Bock (19) innerhalb des inneren Hohlraums (13) zu halten.

## Revendications

1. Outil d'insertion (11) pour insérer un tirant de mur (41) comprenant une partie centrale avec deux ou plusieurs ailettes en spirale dans une unité modulaire de construction constitué de briques ou de béton, dans lequel l'outil (11) comprend : un logement (12) ayant une cavité intérieure (13), un alésage à l'extrémité avant conçu pour recevoir le tirant (41), et une ouverture (15) à l'extrémité arrière ; un tasseau sollicité par ressort (19) disposé pour déplacement va-et-vient à l'intérieur du logement, ayant une extrémité avant (21) s'étendant dans l'alésage et une extrémité arrière conique (22) ; et une enclume (32) qui reçoit l'extrémité conique (22) du tasseau (19) ; le sous-ensemble tasseau/enclume (19,32) s'étendant à travers l'ouverture (15) à l'extrémité arrière du logement (12), et l'enclume (32) étant conçue pour recevoir des coups de percussion répétés à partir d'un outil de percussion et pour transmettre ceux-ci via le tasseau (19) au tirant de mur (41).

2. Outil selon la revendication 1, dans lequel le tasseau est guidé pour déplacement va-et-vient axial à l'intérieur du logement par un élément d'appui (24) qui est monté sur le tasseau et est coulissable contre la surface de la cavité intérieure et par l'alésage guidant l'extrémité avant du tasseau.

3. Outil selon la revendication 1 ou 2, dans lequel l'extrémité avant (21) du tasseau (19) est formé avec une dentelure pour recevoir une extrémité pointue (44) d'un tirant (41).

4. Outil selon la revendication 1, 2 ou 3, dans lequel le sous-ensemble tasseau/enclume (19, 32) est sollicité vers l'arrière.

5. Outil selon l'une quelconque des revendications précédentes, dans lequel l'élément d'appui (24) est une bague d'appui.

6. Outil selon l'une quelconque des revendications précédentes, dans lequel le tasseau (19) comporte un rebord circonférentiel (23) placé entre son extrémité avant (21) et son extrémité arrière.

7. Outil selon la revendication 6, dans lequel l'élément d'appui (24) est placé sur le tasseau (19) à l'arrière du rebord circonférentiel (23) et un collier à palier (26) est placé à l'avant de l'élément d'appui (24).

8. Outil selon l'une quelconque des revendications précédentes, dans lequel le tasseau est sollicité au moyen d'un ressort (31) qui entoure une partie avant du tasseau (19) et agit entre un épaulement (18) à l'intérieur du logement et le rebord circonférentiel (23) sur le tasseau (19).

9. Outil selon l'une quelconque des revendications précédentes, dans lequel le tasseau est sollicité au moyen d'un ressort comprenant une bobine à rotation à gauche de câble de ressort.

10. Outil selon l'une quelconque des revendications précédentes, dans lequel l'alésage à l'avant du logement est constitué par une douille amovible (16).

11. Outil selon la revendication 10 dans lequel la douille (16) est maintenue en position dans le logement (12) au moyen d'une vis sans tête (17).

12. Outil selon la revendication 10 ou 11, dans lequel la douille (16) comporte des extrémités avant et arrière et entre ces extrémités de la douille, le logement (12) comporte un épaulement interne descendant vers l'arrière pour recevoir une extrémité du ressort.

13. Outil selon l'une quelconque des revendications précédentes, dans lequel l'enclume (32) comprend une formation conçue pour mettre en prise la partie fonctionnelle de l'outil de percussion tel qu'un marteau perforateur (55).

14. Outil selon la revendication 13, dans lequel la formation sur l'enclume (32) est sous la forme de rainures disposées pour mettre en prise des cannelures dans la partie fonctionnelles de l'outil à percussion.

15. Outil selon l'une quelconque des revendications précédentes, dans lequel une gaine (36) enveloppe la partie arrière du logement (12) et comporte une ouverture (38) à travers laquelle le sous-ensemble tasseau/enclume (19, 32) passe, la gaine (36) constituant une poignée de saisie.

16. Outil selon l'une quelconque des revendications précédentes, dans lequel un circlip (28) est placé dans une rainure interne (29) du logement (12) à l'arrière du logement pour maintenir le tasseau (19) à l'intérieur de la cavité intérieur (13).
